# EUROPEAN PATENT SPECIFICATION

(11) **EP 3 164 984 B1**
(45) Date of publication and mention of the grant of the patent: **16.05.2018**
(21) Application number: 15736806.9
(22) Date of filing: 30.06.2015
(51) Int. Cl.: H04L 29/08

(54) **METHODS AND NODES FOR FACILITATING COMMUNICATION BETWEEN A TOOL SERVER AND A PLURALITY OF TOOL CONTROLLERS IN A WORK TOOLS COMMUNICATION SYSTEM**
VERFAHREN UND KNOTEN ZUR ERMÖGLICHUNG DER KOMMUNIKATION ZWISCHEN EINEM TOOL-SERVER UND EINER VIELZAHL VON TOOL-STEUERGERÄTEN IN EINEM ARBEITSWERKZEUGKOMMUNIKATIONSSYSTEM
PROCÉDÉS ET NOEUDS POUR FACILITER UNE COMMUNICATION ENTRE UN SERVEUR D'OUTIL ET UNE PLURALITÉ DE DISPOSITIFS DE COMMANDE D'OUTIL DANS UN SYSTÈME DE COMMUNICATION D'OUTIL DE TRAVAIL

(30) Priority: 03.07.2014 SE 1450837
(43) Date of publication of application: 10.05.2017
(73) Proprietor: Atlas Copco Industrial Technique AB, 105 23 Stockholm (SE)
(72) Inventor: JONSSON, Bo, 138 35 Älta (SE)
(74) Representative: Tholin, Thomas
(86) International application number: PCT/EP2015/064816
(87) International publication number: WO 2016/001211

(56) References cited:
- DE-A1-102012 221 997
- US-A1- 2002 193 905

## Description

### Technical field

The present invention relates generally to methods and nodes for facilitating communication between a tool server and a plurality of tool controllers in a work tools communication system.

### Background art

Work tools and systems with work tools, including portable work tools such as power wrenches operated by an operator, are often used in production work. A common application is in assembly lines. Nowadays, work tools in assembly lines may have a controller connected to them and the controller controls the work performed by the tool so that the tool works automatically. I.e. the controller sees to that the tool is operated correctly, e.g. performing a wrench operation with the correct torque. Documents D1 DE 10 2012 221997 A1 (BOSCH GMBH ROBERT [DE]) 28 November 2013 (2013-11-28); & US 2015/135306 A1 (WINKLER THOMAS [DE] ET AL) 14 May 2015 (2015-05-14) and D2 US 2002/193905 A1 (DAVISON LARRY A [US] ET AL) 19 December 2002 (2002-12-19) represent examples of prior art.

Sometimes it is necessary to update the controller with new information. For example, the tools may have to perform new operations or change dimensions or torque.

Previously, when an update of data is needed to tool controllers in an environment where there are many tool controllers, an operator has needed to connect to one controller at a time, to re-program the controllers. This is very time consuming. Consequently, there is a need to facilitate updating of data in an environment comprising more than one tool controller.

Further, it has not been possible to pre-plan for example a new production line of a factory comprising a number of tool controllers and to implement such a pre-planning in a fast and easy way.

As shown above, there is a need to be able to facilitate communication in an environment comprising many, or more than one, tool controllers.

### Summary of invention

It is an object of the invention to address at least some of the problems and issues outlined above. It is possible to achieve these objects and others by using methods, tools servers and tool controllers as defined in the attached independent claims.

According to an aspect, a method is provided performed by a work tools communication system for facilitating communication between a tool server and a plurality of tool controllers of the work tools communication system, the tool server being connected to the plurality of tool controllers. The tool controllers are adapted for communication with work tools connected to the tool controllers. The method comprises sending, from the tool server to a first of the plurality of tool controllers, a message relating to control of one or more work tools connected to the first tool controller, the message comprising a destination address of the first tool controller and a requested action to be performed by the first tool controller. The method further comprises receiving, by the first tool controller, the message sent by the tool server, based on the destination address, analyzing, by the first tool controller, the message to detect the requested action, and controlling, by the first tool controller, the one or more work tools connected to the first tool controller according to the detected requested action, wherein the message further comprises a header part and a payload part, the header part comprising the requested action and the payload part comprising details of the requested action, and wherein the payload part is divided into a plurality of data nodes, each data node comprising a type of data field and a data value field.

According to another aspect, a tools server of a work tools communication system is provided for communicating with a plurality of tool controllers of the work tools communication system, the plurality of tool controllers further being adapted for communication with work tools connected to the plurality of tool controllers. The tool server comprises a processor and a memory, said memory containing instructions executable by said processor, whereby said tool server is operative for sending to a first of the plurality of tool controllers, a message relating to control of one or more work tools connected to the first tool controller, the message comprising a destination address of the first tool controller and a requested action to be performed by the first tool controller, wherein the message further comprises a header part and a payload part, the header part comprising the requested action and the payload part comprising details of the requested action, and wherein the payload part is divided into a plurality of data nodes, each data node comprising a type of data field and a data value field.

According to another aspect, a tool controller of a work tools communication system is provided for communicating with a tool server of the work tools communication network, the tool controller being adapted for communication with work tools connected to the tool controller. The tool controller comprises a processor and a memory, said memory containing instructions executable by said processor, whereby said tool controller is operative for receiving from the tool server, a message relating to control of one or more of the work tools connected to the tool controller, the message comprising a destination address of the tool controller and a requested action to be performed by the tool controller, the message being received based on the destination address. The memory further contains instructions executable by said processor, whereby said tool controller is operative for analyzing the received message to detect the requested action, and controlling the one or more work tools of the tool controller according to the detected requested action. The message further comprises a header part and a payload part, the header part comprising the requested action and the payload part comprising details of the requested action, and wherein the payload part is divided into a plurality of data nodes, each data node comprising a type of data field and a data value field.

According to other aspects, methods performed by a tools server, methods performed by a tool controller, computer programs and computer program products are also provided, the details of which will be described in the claims and the detailed description.

The above methods and apparatuses may be configured and implemented according to different optional embodiments. Further possible features and benefits of this solution will become apparent from the detailed description below.

### Brief description of drawings

The invention is now described, by way of example, with reference to the accompanying drawings, in which:
Fig. 1 is a block diagram of a work tools communication system according to an embodiment.
Fig. 2 is a flow chart of a method performed by a work tools communication system for facilitating communication between a tool server and a plurality of tool controllers according to an embodiment.
Figs. 3-5 are block diagrams of message structures according to different embodiments.
Fig. 6 is a flow chart of a method performed by a tool controller according to an embodiment.
Fig. 7 is a block diagram of a tool server according to an embodiment.
Fig. 8 is a block diagram of a tool controller according to an embodiment.

### Description of embodiments

Briefly described, a solution is described that facilitates communication between a tools server and tool controllers in a work tools communication system. This is achieved by a communication method and system in which a message is sent from the tools server directed to a first of the tool controllers, the message comprising a destination address indicating that the first tool controller is the intended receiver of the message, and a requested action, i.e. an action that the tool server requests the first tool controller to perform. The requested action may be e.g. to update with new control data or to send its configuration parameters or to send results of measurements performed by the tool controller. Further, the message normally also comprises one or more types of data that the requested action is to be performed upon, i.e. torque of a wrench, depth of a drill hole and/or also types of tools that the action should be performed upon. When the requested action is to deliver a data value, like for the action "update with new control data", the message also comprises one or more data values, i.e. 42 Nm (torque) or 50 mm (depth of drill hole). When receiving such a message, the first tool controller analyzes the message to determine the requested action, types of data and possible data values. Thereafter, the first tool controller acts according to the received message and after performing the requested action the first tool controller may respond by sending an acknowledgement to the tools server. The acknowledgement message may comprise data values if the request specifies this. The tool controllers may use the same protocol as the tools server so that they can analyze the message and determine the requested action, type of data and possible data values. Thanks to such a solution it is possible for a tools server to communicate with different tool controllers to control the tool controllers.

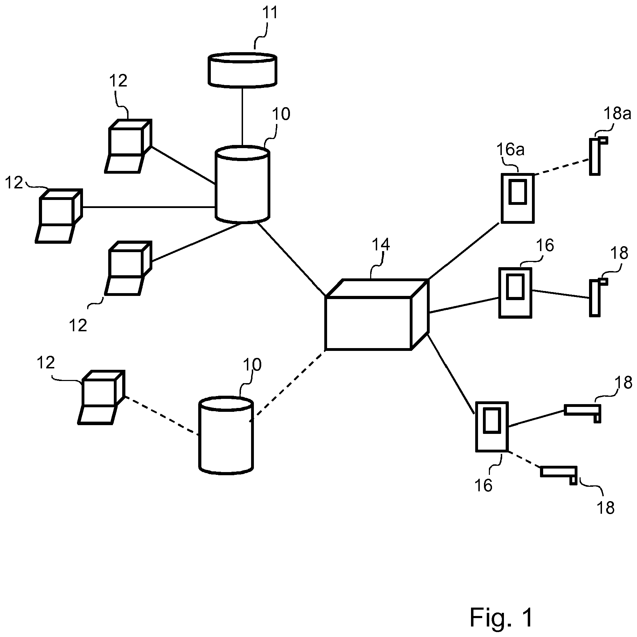

Fig. 1 shows a tool communication system comprising a plurality of tool controllers 16, 16a for control, supervision and/or collection of result data from one or more work tools 18, individual of the work tools in turn being connected to one of the tool controllers. In other words, to each tool controller there is connected one or more tools that are to be controlled by the tool controller the individual tool is connected to. The tool communication system further comprises a tools server 10 for configuration management, control of the tool controllers 16, storage of result data received from the tool controllers and/or storage of control data sent to the tool controllers. The tool communication system further comprises a hub 14 for management and relay of communication. Also, there may be clients 12 such as laptops connected to the tools server 10. There may be more than one tools server in a tool communication system, illustrated by the two tools servers in fig. 1.

A work tool 18 may be any kind of power driven tool that is used for performing mechanical operations, such as a wrench, a drill, a hammer. The work tool 18 may be a part of a work station with e.g. material for production, arrangements for material handling etc. The work tool 18 may be set up for simple operations, or just manually controlled by an operator person. However, the work tool may also be set up for complex work operations by a configuration. Such complex work operations may include a number of similar and different operations, series of operations with one equipment, shifting to another equipment followed by another series of operations and may be shifting to a third equipment. How the work tool should perform operations and interact with an operator, may be based on control data received from the tools server. Each individual operation may need to be performed with high accuracy in terms of e.g. torque and rotation speed. Further, in order to maintain desirable quality control, results performed by the work tools may be measured by e.g. sensors, such results may be the number of rotations performed, final torque, location of operation, time, and similar result data for work tool operation.

The tool communication system may be applied e.g. in a small manufacturing plant in a clean environment. The tool communication system may be distributed over several buildings or over remote locations. The manufacturing environment may also be a factory with a challenging environment of dirt, aggressive chemicals, electrical disturbances, sometimes challenging for communication equipment and computers. Sometimes the communication may be interrupted. Even if it is a challenging environment, configuration data and result data need to be conveyed between a tool server and a controller. Production stops or production disturbances need to be avoided, because they sometimes result in significant costs.

Communication in the tool communication system may be performed based on Local Area Network, LAN, technologies such as Ethernet, e.g. according to IEEE 802.3 , Transfer Control Protocol/User Datagram Protocol/Internet Protocol, TCP/UDP/IP, wireless protocols such as Wireless LAN, e.g. according to IEEE 802.11, just to mention a few non-limiting examples. The tool communication system may be operational in a factory or a manufacturing plant, for examples for manufacturing of consumer or industrial goods, including house hold appliances, cars, toys, machines, etc. The tool communication system may be covering or connecting a number of facilities within a closed area such a campus with a number of buildings. The tool communication system may be covering or connecting a number of factories or manufacturing plants remotely located from each other.

A tool server, such as the tool server 10, may be a server which clients 12 may connect to for creation and/or administration of work operations for work tools 18. The tool server 10 may be a general purpose server or a tool server specifically arranged for remote control of work tools. Administrators connecting to the tool server via clients 12, may for example create, specify and change how a particular work tool 18 or a group of work tools 18 should behave in a certain situation. Examples are series of operations, tool selections, values for each operation like a torque rate, number of rotations, rotational speed, position, how and when result data should be feed backed, etc.

A hub, such as the hub 14, may be arranged for managing communication between different participating functional nodes or devices in the communications network. The hub 14 may for example keep track of identities of tool controllers 16, tool servers 10, and/or work tools 18. The hub 14 may keep track of any nodes or devices alternating between on-line and off-line. A tool controller 16 may for example not always be connected to a network for various reasons. The hub 14 may further validate and/or authorize node or device communication in the communications network.

A tool controller 16, such as a first tool controller 16a, may be a tool controller for control of work tools. The tool controller may be a specific node for control of work tools or it may be for example a general purpose computer, which has been adapted for control of work tools. The tool controller may be connected to the tool communication system for communication by wire or wirelessly. The tool controller may receive control data and store the control data in a suitable database from e.g. the tool server 10. The tool controller may use the control data for control of a work tool or operation of a work tool. Sensors of the tool controller or the work tool may generate result data of work tool operations. The tool controller 16 may also be termed controller, controller node, controlling node, control unit, tool processor, tool regulator, or similar terms. The tool controller 16 may be co located with or comprised in a work tool 18, a tool server 10, a hub 14, or other suitable technical nodes operating in a tool communication system.

A work tool 18, such as a first work tool 18a, may be controlled by the first tool controller 16a. Controlling a work tool 18a may for example include providing control data to the work tool, operating the work tool by provision of electrical power, pneumatic or hydraulic power, sensor instructions, not limiting to other types of control or regulation. Controlling the work tool may for example also include detection of electrical energy consumption, sensing of pneumatic or hydraulic power, torque, torque rate, position, three dimensional position, or other types of sensor data. Examples of a work tool 18 may be a torque wrench, a hammer, a breaker, a rock drill, a nut runner, a screwdriver, or various combinations of those, not limiting to other similar types of work tools. A work tool 130 may be connected by wire or wirelessly to its tool controller.

A client 12 may be a computer, e.g. a laptop or a stationary computer that is connected wirelessly or via wire line to the tools server. The client may be run by an administrator and used by the administrator to for example control the function of the work tools and/or the tool controllers, by for example supervising sensor data delivered by the tool controllers to the tool server and inputting tool control data that is delivered by the tool server to the concerned tool controller for subsequent delivery to the concerned work tools of that tool controller.

Further, control data that are delivered to a tool controller and stored at the tool controller may also be stored at a database 11 of the tool server 10. Also, other data related to the control and/or operation of the work tools may be stored at the database of the tool server, such as sensor data.

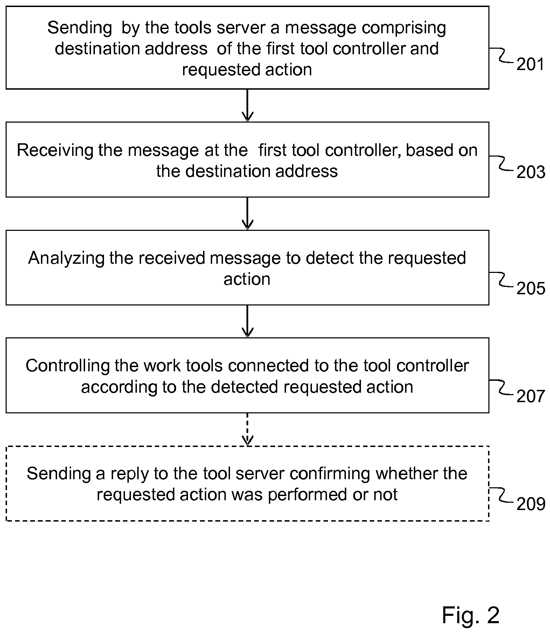

According to an embodiment shown in fig. 2, a method is provided performed by a work tools communication system for facilitating communication between a tool server 10 and a plurality of tool controllers 16a, 16, 16 of the work tools communication system, the tool server 10 being connected to the plurality of tool controllers 16a, 16, 16, the tool controllers further being adapted for communication with work tools 18 connected to the tool controllers. The method comprises sending 201, from the tool server 10 to a first 16a of the plurality of tool controllers, a message relating to control of one or more work tools 18 connected to the first tool controller 16a, the message comprising a destination address of the first tool controller and a requested action to be performed by the first tool controller. The method further comprises receiving 203, by the first tool controller 16a, the message sent by the tool server 10, based on the destination address, analyzing 205, by the first tool controller 16a, the message to detect the requested action and controlling 207, by the first tool controller 16a, the one or more work tools connected to the first tool controller according to the detected requested action.

The tool server 10 may further be adapted for communication with operator clients 12 connected to the tool server. The requested action may be for example "update with new data"," "check function of tool", "read and store received data". Data may in this case be data for controlling the tools of the first tool controller such as a new torque value. The operator client may connect to the server for inputting new information, such as tool controllers to be controlled, requested action, possible data to be changed and data value. The tool server may be arranged to interpret information input from the operator client and to compile the message to be sent to the first tool controller based on the received information. The tool server may also be arranged to receive from the operator client a sending time point when the message is to be sent to the first tool controller and to send the message at the sending time point. The tool server and the plurality of tool controllers are provided with the same communication protocol. Further, the operator clients may be provided with the same communication protocol as the tool server and the plurality of tool controllers. The requested action may further comprise information of which tools or which type of tools connected to the first tool controller that the requested action is to be performed upon. Further, the requested action may, in case of the action being "update with new data" also comprise information of which data that is to be updated and to which value the data is to be updated to.

By sending the destination address of the first tool controller in the message, the message can be directed to the first controller, and subsequently received and treated by the first controller and not by any other controller to which the message is not destined. By sending the requested action, the tool controller knows what to do with the information. Further, a data field in which the destination address is defined may comprise more than one destination address if the requested action is to be performed by many tool controllers. Thereby, it is possible to instruct many tool controllers to perform the same action by only sending one message.

According to an embodiment, when the requested action is related to data for controlling the tools of the first tool controller, such as a new torque value, the message further comprises type of data, and possibly also a data value. If the requested action is for example "update with new data", "receive and store data" or "send data relating to your function", the message further defines type of data, i.e. which data that is to be updated, and to which value. For example, if all wrenches connected to the tool controller is to be controlled, type of data may be torque for the wrenches, and the data value is then the torque value which the wrenches are to use. Another example of type of data in the wrench example is a maximum or minimum angle.

According to another embodiment, the message further comprises a source address of the tools server 10 and a session identity, and possibly also a sequence number. By setting a session identity, which is an identity identifying a communication session between the communicating parties, in this case the tools server 10 and the first tool controller 16a, the different nodes may communicate further, after the session has started between the tools server 10 and the first tool controller 16a using the session identity and knowing that this it is the same session involving the same parties as when the session started. By setting a sequence number it is defined which message this is in an order of messages in this session. It may be necessary to use sequence numbers since the communication may be asynchronous such that a responding node, e.g. a tool controller, may respond to requests from a requesting node, e.g. a tools server, in a different order than the requests were sent. Then the requesting node may determine to which request a certain response belongs based on the sequence numbers. Also, if the requests are received at the responding node in a different order than they were sent, it is possible for the responding node to determine the order of the requests.

According to another embodiment, the message further comprises a source address of the tools server 10 and possibly also information defining whether the message is a request, or a reply to a request. By sending the source address, the receiver of the message knows where to send its reply. By indicating whether the message is a request or a reply, the direction in which the message is sent is indicated and it is not necessary to indicate the direction by changing source and destination address between the two nodes for each message for the same session. For example, if the request is sent from the tools server 10, the address of the tools server is the source address, and if the request is received by the first tool controller 16a, the address of the first tool controller is the destination address. For a reply to such a request, i.e. a message sent in the opposite direction, from the first tool controller to the tools server, the source address could still be at the tools server and the destination address could be still be at the first tool controller and the direction of the message is indicated by defining whether it is a reply or a request. Reply or request could be indicated by a flag, i.e. request = 0, reply = 1.

According to another embodiment, the message further comprises information of which types of nodes the tools server and the first tool controller are. For a person managing a network of servers, clients and controllers it will be easier to plan changes in the system when, except for a unique ID, the nodes in the system may be classified into which kind of node they are, e.g. if they are a server, a client, a controller or any other type of node. Alternatively, they may be classified more specifically: e.g. that node A is a controller node of type PowerFocus6000, a controller type used by the applicant, and node B is a tools server of type ToolsTalk, a server type used by the applicant, etc.

According to another embodiment, the method further comprises sending 209 a reply, by the first tool controller 16a to the tool server 10, the reply confirming whether the requested action was performed or not. Thereby, the tools server knows whether the requested action was performed or not.

According to another embodiment, the message comprises a header part and a payload part, the header part comprising the requested action and the payload part comprising details of the requested action. Details of the requested action may be type of data and data value. I.e., when requested action is "update with new data", type of data may be "torque to all wrenches" and data value may be "42". When requested action is "send data relating to your function", type of data may also be "used torque" or, if there is a sensor on the wrench "experienced torque".

According to yet another embodiment, the payload part is divided into a plurality of data nodes, each data node comprising a type-of-data field and a data-value field. This way it is possible to send information of many different details of a requested action in one message, such as "torque value" in the type-of-data field in a first data node and "depth of bore hole" in the type-of-data field in a second data node. When the requested action indicates that a data value is needed, such as "update with new data", the data value field is populated with the data value, to continue with the example above e.g. "42" (Nm) in the data value field in the first data node and e.g. "50" (mm) in the data value field in the second data node. If there is no value to be sent to the tool controller, for example for the action "send data relating to your function", the data value field is set to e.g. NULL.

According to yet another embodiment, individual of the plurality of data nodes further comprises a length field defining the length of individual of the type of data field and the data value field. By defining the length of each field in the data nodes the individual data fields are detectable without having to de-serialize the data. Further, this makes it possible to read the individual data fields even when written in binary code.

According to yet another embodiment, individual of the plurality of data nodes further comprises one or more child data node fields, which child data node fields each comprises a type of data field and a data value field.

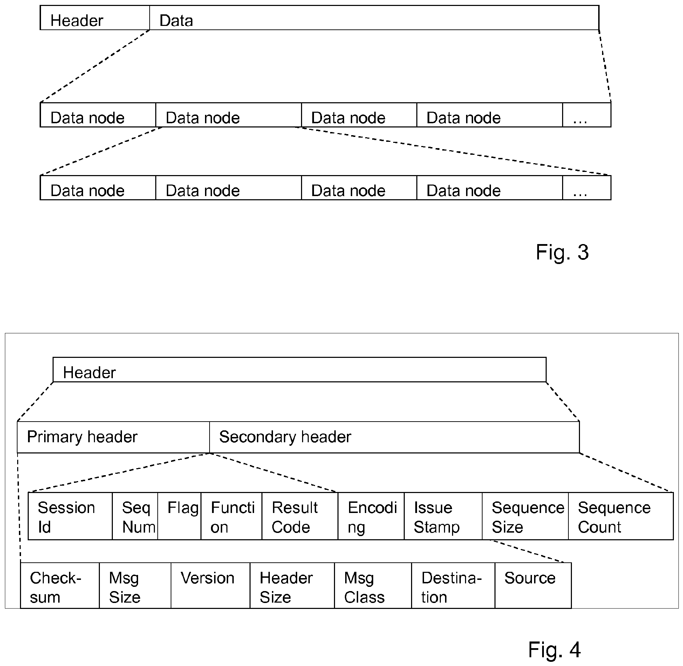

In the following is described structure and serialization of messages sent in a work tools communication system according to embodiments of the present invention. The structures used for passing information and commands consist of a header and a data section, also called payload, see fig. 3. Further, as shown in fig. 3, the data section may contain a set of named data nodes that can be nested. Additionally each data node can carry attributes. Using these structures would allow for clients to add any metadata, i.e. data not necessarily handled by serving entity. This could for example facilitate test frameworks with means of adding trace data for different test cases. It would also make it possible to, in some cases, handle different software versions during development; a client could add additional data not yet supported by a tool server.

Fig. 4 shows a header structure according to an embodiment. The header may be broken up into two parts, a primary header and an additional secondary header. This approach will allow for future enhancements to the secondary header with minimal impact on systems using an older version of the header. Depending on interest, entities receiving a message do not need to inflate all data, only data of interest to the entity need to be de-serialized. In the table below is shown the function and description of the different fields of the primary header shown in fig. 4. One, many or all of the fields may be used in the present invention.

| **Name** | **Description** |
|---|---|
| Checksum | CRC32 checksum for primary header. Main purpose is to protect size field. |
| MsgSize | Size of complete message. |
| Version | Protocol version. |
| Header Size | Size of secondary header. |
| Msg Class | Message classification. E.g. Event, Result, KeepAlive, Read, Update, Invoke etc. |
| Destination | Destination is an endpoint consisting of 2 parts. First part is a number indicating system type (e.g. ToolsTalk or PF6000). The second part is a unique identifier for given system type, typically a GUID. |
| Source | Source is an endpoint consisting of 2 parts. First part is a number indicating system type. The second part is a unique identifier for given system type, typically a GUID. |

The secondary header may comprise information to be used by routing entity, e.g. hub, to find correct communication channel. It also contains message specific information like sequence number, function and result code. In the table below is shown the function and description of the different fields of the secondary header shown in fig. 4. One, many or all of the fields may be used in the present invention.

| **Name** | **Description** |
|---|---|
| Sessionld | Session identity. Set primarily by issuing entity for identifying session being addressed, but also set by serving entity when session is established/allocated. |
| SeqNum | Unique id of current message. Used to match request to reply. |
| Flags | Flags added by both issuing entity and serving entity. Flag ex: IsAcknowledge, IsReply, SendAck, SendReply, LogResult, LogHeader, LogMessage. |
| Function | Set by issuing entity to identify function to invoke, e.g. |
| | Read, Update, SelectWorktask etc. |
| | 0-1000 reserved for general functions, 1000-max may be used by any endpoint to define any specific function. |
| Result code | Serving or routing entity sets a code to indicate how message completed. E.g. OK, Timeout, RoutingError, InvalidSession, InvalidData etc. |
| Encoding | Set by issuing entity to indicate data encoding, e.g. plain or zip. |
| IssueStamp | Timestamp when message was sent. |
| SequenceSize | If message data is split into several messages this indicates how many messages. 0 and 1 means the same thing; all data is contained within current message. |
| SequenceCount | If message data is split into several messages this specifies what part of the complete data the current message contains. |

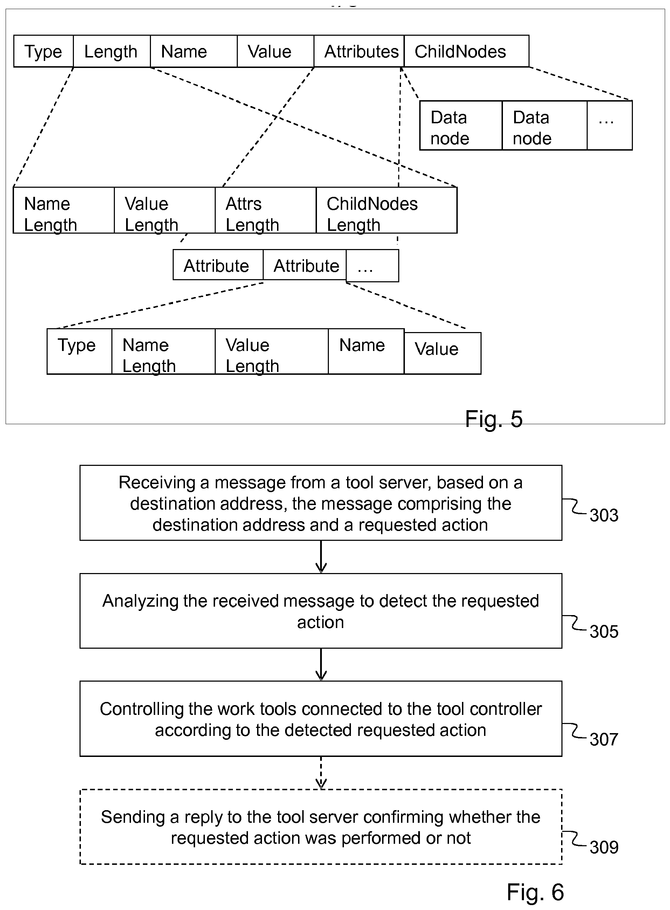

A data node according to an embodiment is shown in fig. 5. The data node may contain one or more of the following data fields: name, value, child nodes and attributes. Additional information is needed for size calculation (field: Length) and type of value (field: Type). The data fields Name, child nodes, attributes and value may be optional. This means that for example value can be NULL. In the table below is shown the function and description of the different fields of the data node shown in fig. 5.

| **Name** | **Description** |
|---|---|
| Type | Type of value. E.g. Int32 (4 bytes), Int64 (8 bytes), Single (4 bytes) etc. |
| NameLength | Length of name field. |
| ValueLength | Length of value. |
| AttributesLength | Length of attributes section. |
| ChildNodesLength | Length of child node section. |
| Name | Name of node. |
| Value | Data value. |
| Attributes | Attributes. |
| ChildNodes | Child nodes. |

Attributes may be very similar to data nodes. An attribute also has a name and a value, but cannot contain any children. The possible fields of an attribute are shown in the table below.

| **Name** | **Description** |
|---|---|
| Type | Type of value. E.g. Int32 (4 bytes), Int64 (8 bytes), Single (4 bytes) etc. |
| NameLength | Length of name field |
| ValueLength | Length of value |
| Name | Name of attribute |
| Value | Attribute value |

Fig. 6 describes an embodiment of a method performed by a tool controller 16a of a work tools communication system for facilitating communication with a tool server 10 of the work tools communication system, the tool controller being adapted for communication with work tools 18 connected to the tool controller. The method comprises receiving 303, from the tool server 10, a message relating to control of one or more work tools 18a connected to the tool controller 16a, the message comprising a destination address of the tool controller and a requested action to be performed by the tool controller, the message being received based on the destination address. The method further comprises analyzing 305 the received message to detect the requested action and controlling 307 the one or more work tools 18a of the tool controller according to the detected requested action. The method may according to an embodiment also comprise sending 309 a reply to the tolls server confirming whether the requested action was performed or not.

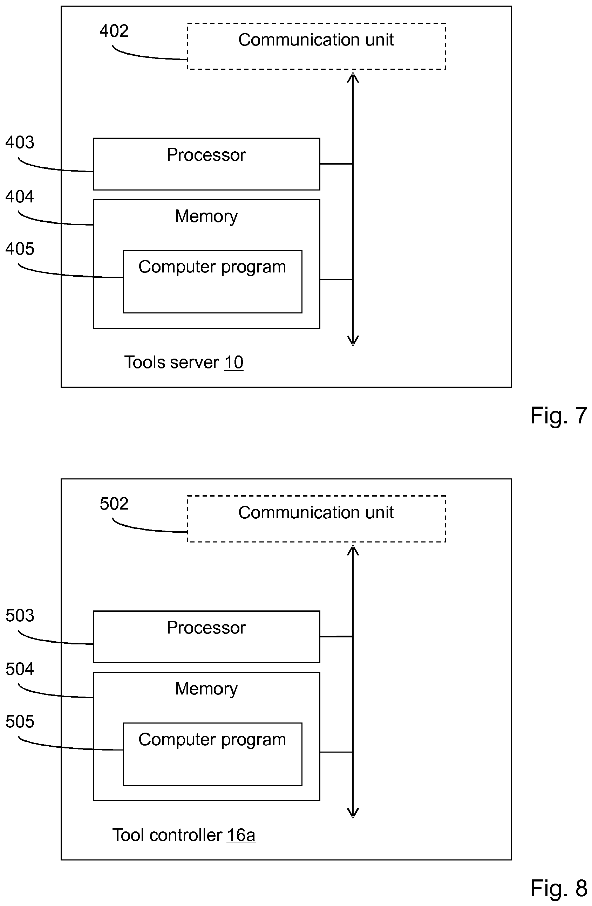

Fig. 7 describes an embodiment of a tools server 10 of a work tools communication system for communicating with a plurality of tool controllers 16a, 16, 16 of the work tools communication system, the plurality of tool controllers further being adapted for communication with work tools 18 connected to the plurality of tool controllers. The tool server 10 comprises a processor 403 and a memory 404, said memory containing instructions executable by said processor, whereby said tool server is operative for sending to a first 16a of the plurality of tool controllers, a message relating to control of one or more work tools 18a connected to the first tool controller 16a, the message comprising a destination address of the first tool controller and a requested action to be performed by the first tool controller.

According to different embodiments, the memory 404 may further contain instructions executable by the processor whereby the tools server 10 is operative to perform any of the embodiments described in connection with the description of the method of fig. 2.

The tools server 10 may further comprise a communication unit 402, which may be considered to comprise conventional means for communicating from and/or to the other nodes in the network, such as the tool controllers 16, 16a, 16. The conventional communication means may include at least one transmitter and at least one receiver. The instructions executable by said processor may be arranged as a computer program 405 stored in said memory 404.

The computer program 405 may comprise computer readable code means, which when run in the tools server 10 causes the tools server to perform the steps described in any of the described embodiments. The computer program may be carried by a computer program product connectable to the processor. The computer program product may be the memory 404. The memory 404 may be realized as for example a RAM, ROM, or an EEPROM. Further, the computer program may be carried by a separate computer-readable medium, such as a CD, DVD or flash memory, from which the program could be downloaded into the memory 404. Alternatively, the computer program may be stored on another server or any other entity connected to the communication system to which the tools server has access via its communication unit 402. The computer program may then be downloaded from the server into the memory 404.

Fig. 8 describes an embodiment of a tool controller 16a of a work tools communication system for communicating with a tool server 10 of the work tools communication network, the tool controller being adapted for communication with work tools 18 connected to the tool controller. The tool controller 16a comprises a processor 503 and a memory 504, said memory containing instructions executable by said processor, whereby said tool controller is operative for receiving from the tool server 10, a message relating to control of one or more of the work tools 18a connected to the tool controller 16a, the message comprising a destination address of the tool controller and a requested action to be performed by the tool controller, the message being received based on the destination address. The memory further contains instructions executable by said processor 503, whereby said tool controller is operative for analyzing the received message to detect the requested action, and controlling the one or more work tools 18 of the tool controller according to the detected requested action.

According to different embodiments, the memory 504 may further contain instructions executable by the processor whereby the tools controller 16a is operative to perform any of the embodiments described in connection with the description of the method of fig. 2.

The tool controller 16a may further comprise a communication unit 502, which may be considered to comprise conventional means for communicating from and/or to the other nodes in the network, such as the tools server 10. The conventional communication means may include at least one transmitter and at least one receiver. The instructions executable by said processor may be arranged as a computer program 505 stored in said memory 504.

The computer program 505 may comprise computer readable code means, which when run in the tool controller 16a causes the tools controller to perform the steps described in any of the described embodiments. The computer program may be carried by a computer program product connectable to the processor. The computer program product may be the memory 504. The memory 504 may be realized as for example a RAM, ROM, or an EEPROM. Further, the computer program may be carried by a separate computer-readable medium, such as a CD, DVD or flash memory, from which the program could be downloaded into the memory 504. Alternatively, the computer program may be stored on a server or any other entity connected to the communication system to which the tool controller has access via its communication unit 502. The computer program may then be downloaded from the server into the memory 504.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly limited to the scope of the appended claims. Reference to an element in the singular is not intended to mean "one and only one" unless explicitly so stated, but rather "one or more." Moreover, it is not necessary for an apparatus or method to address each and every problem sought to be solved by the presently described concept, for it to be encompassed hereby.

## Claims

1. A method performed by a work tools communication system for facilitating communication between a tool server (10) and a plurality of tool controllers (16a, 16, 16) of the work tools communication system, the tool server (10) being connected to the plurality of tool controllers (16a, 16, 16), the tool controllers further being adapted for communication with work tools (18) connected to the tool controllers, the method comprising:
sending (201), from the tool server (10) to a first (16a) of the plurality of tool controllers, a message relating to control of one or more work tools (18a) connected to the first tool controller (16a), the message comprising a destination address of the first tool controller and a requested action to be performed by the first tool controller;
receiving (203), by the first tool controller (16a), the message sent by the tool server (10), based on the destination address,
analyzing (205), by the first tool controller (16a), the message to detect the requested action,
controlling (207), by the first tool controller (16a), the one or more work tools (18a) connected to the first tool controller according to the detected requested action,
wherein the message further comprises a header part and a payload part, the header part comprising the requested action and the payload part comprising details of the requested action, and wherein the payload part is divided into a plurality of data nodes, each data node comprising a type of data field and a data value field.

2. Method according to claim 1, wherein when the requested action is related to data for controlling the tools of the first tool controller, such as a new torque value, the message further comprises type of data, and a data value.

3. Method according to claim 1 or 2, wherein the message further comprises a source address of the tools server (10) and a session identity, and possibly also a sequence number.

4. Method according to any of claims 1-3, wherein the message further comprises a source address of the tools server (10) and possibly also information defining whether the message is a request, or a reply to a request.

5. Method according to any of the preceding claims, wherein the message further comprises information of which types of nodes the tools server and the first tool controller are.

6. Method according to any of the preceding claims, further comprising sending a reply, by the first tool controller (16a) to the tool server (10), the reply confirming whether the requested action was performed or not.

7. Method according to claim 1, wherein individual of the plurality of data nodes further comprises a length field defining the length of individual of the type of data field and the data value field.

8. Method according to any of claims 1 or 7, wherein individual of the plurality of data nodes further comprises child data node fields, which child data node fields each comprises a type of data field and a data value field.

9. A method performed by a tool server (10) of a work tools communication system for facilitating communication between the tool server (10) and a plurality of tool controllers (16a, 16, 16) of the work tools communication system, the plurality of tool controllers further being adapted for communication with work tools (18) connected to the tool controllers, the method comprising:
sending to a first (16a) of the plurality of tool controllers, a message relating to control of one or more work tools (18a) connected to the first tool controller (16a), the message comprising a destination address of the first tool controller and a requested action to be performed by the first tool controller, wherein the message further comprises a header part and a payload part, the header part comprising the requested action and the payload part comprising details of the requested action, and wherein the payload part is divided into a plurality of data nodes, each data node comprising a type of data field and a data value field.

10. A method performed by a tool controller (16a) of a work tools communication system for facilitating communication with a tool server (10) of the work tools communication system, the tool controller being adapted for communication with work tools (18) connected to the tool controller, the method comprising:
Receiving (303), from the tool server (10), a message relating to control of one or more work tools (18a) connected to the tool controller (16a), the message comprising a destination address of the tool controller and a requested action to be performed by the tool controller, the message being received based on the destination address, wherein the message further comprises a header part and a payload part, the header part comprising the requested action and the payload part comprising details of the requested action, and wherein the payload part is divided into a plurality of data nodes, each data node comprising a type of data field and a data value field;
analyzing (305) the received message to detect the requested action,
controlling (307) the one or more work tools (18a) of the tool controller according to the detected requested action.

11. A tools server (10) of a work tools communication system for communicating with a plurality of tool controllers (16a, 16, 16) of the work tools communication system, the plurality of tool controllers further being adapted for communication with work tools (18) connected to the plurality of tool controllers, the tool server (10) comprising a processor (403) and a memory (404), said memory containing instructions executable by said processor, whereby said tool server is operative for:
sending to a first (16a) of the plurality of tool controllers, a message relating to control of one or more work tools (18a) connected to the first tool controller (16a), the message comprising a destination address of the first tool controller and a requested action to be performed by the first tool controller, wherein the message comprises a header part and a payload part, the header part comprising the requested action and the payload part comprising details of the requested action, and wherein the payload part is divided into a plurality of data nodes, each data node comprising a type of data field and a data value field.

12. Tools server according to claim 11, wherein when the requested action is related to data for controlling the tools of the first tool controller, such as a new torque value, the message further comprises type of data, and possibly also a data value.

13. Tools server according to claim 11 or 12, wherein the message further comprises a source address of the tools server (10) and a session identity, and possibly also a sequence number.

14. Tools server according to any of claims 11-13, wherein the message further comprises a source address of the tools server (10) and possibly also information defining whether the message is a request, or a reply to a request.

15. Tools server according to any of claims 11-14, wherein the message further comprises information of which types of nodes the tools server and the first tool controller are.

16. Tools server according to any of claims 11-15, wherein said memory (404) further contains instructions executable by said processor (403), whereby said tools server is operative for receiving a reply from the first tool controller (16a), the reply confirming whether the requested action was performed or not.

17. Tools server according to claim 11, wherein individual of the plurality of data nodes further comprises a length field defining the length of individual of the type of data field and the data value field.

18. Tools server according to any of claims 11 or 17, wherein individual of the plurality of data nodes further comprises child data node fields, which child data node fields each comprises a type of data field and a data value field

19. A tool controller (16a) of a work tools communication system for communicating with a tool server (10) of the work tools communication network, the tool controller being adapted for communication with work tools (18) connected to the tool controller, the tool controller (16a) comprising a processor (503) and a memory (504), said memory containing instructions executable by said processor, whereby said tool controller is operative for:
receiving from the tool server (10), a message relating to control of one or more of the work tools (18a) connected to the tool controller (16a), the message comprising a destination address of the tool controller and a requested action to be performed by the tool controller, the message being received based on the destination address;
analyzing the received message to detect the requested action, and
controlling the one or more work tools (18a) of the tool controller according to the detected requested action,
wherein the message further comprises a header part and a payload part, the header part comprising the requested action and the payload part comprising details of the requested action, and wherein the payload part is divided into a plurality of data nodes, each data node comprising a type of data field and a data value field.

20. Tool controller according to claim 19, wherein when the requested action is related to data for controlling the tools of the tool controller, such as a new torque value, the message further comprises type of data, and possibly also a data value.

21. Tool controller according to claim 19 or 20, wherein the message further comprises a source address of the tools server (10) and a session identity, and possibly also a sequence number.

22. Tool controller according to any of claims 19-21, wherein the message further comprises a source address of the tools server (10) and possibly also information defining whether the message is a request, or a reply to a request.

23. Tool controller according to any of claims 19-22, wherein the message further comprises information of which types of nodes the tools server and the tool controller are.

24. Tool controller according to any of claims 19-23, wherein said memory (504) further contains instructions executable by said processor (503), whereby said tool controller is operative for sending a reply to the tool server (10), the reply confirming whether the requested action was performed or not.

25. Tool controller according to claim 19, wherein individual of the plurality of data nodes further comprises a length field defining the length of individual of the type of data field and the data value field.

26. Tool controller according to any of claims 19 or 25, wherein individual of the plurality of data nodes further comprises child data node fields, which child data node fields each comprises a type of data field and a data value field.

27. A computer program (405) comprising computer readable code means, which when run in a tools server (10) of a work tools communication system for communicating with a plurality of tool controllers (16a, 16, 16) of the work tools communication system, causes the tool server to perform the following steps:
sending to a first (16a) of the plurality of tool controllers, a message relating to control of one or more work tools (18a) connected to the first tool controller (16a), the message comprising a destination address of the first tool controller and a requested action to be performed by the first tool controller, wherein the message further comprises a header part and a payload part, the header part comprising the requested action and the payload part comprising details of the requested action, and wherein the payload part is divided into a plurality of data nodes, each data node comprising a type of data field and a data value field.

28. A computer program (505) comprising computer readable code means, which when run in a tool controller (16a, 16, 16) of a work tools communication system for communicating with a tools server (10) of the work tools communication system, causes the tool controller to perform the following steps:
receiving, from the tool server (10), a message relating to control of one or more work tools (18a) connected to the tool controller, the message comprising a destination address of the first tool controller and a requested action to be performed by the first tool controller, the message being received based on the destination address;
analyzing the received message to detect the requested action,
controlling the one or more work tools (18a) of the tool controller according to the detected requested action,
wherein the message further comprises a header part and a payload part, the header part comprising the requested action and the payload part comprising details of the requested action, and wherein the payload part is divided into a plurality of data nodes, each data node comprising a type of data field and a data value field.

## Patentansprüche

1. Verfahren, das von einem Arbeitswerkzeug-Kommunikationssystem zum Erleichtern der Kommunikation zwischen einem Werkzeugserver (10) und einer Vielzahl von Werkzeugsteuerungen (16a, 16, 16) des Arbeitswerkzeug-Kommunikationssystems ausgeführt wird, wobei der Werkzeugserver (10) mit der Vielzahl von Werkzeugsteuerungen (16a, 16, 16) verbunden ist, wobei die Werkzeugsteuerungen ferner zur Kommunikation mit Arbeitswerkzeugen (18) eingerichtet sind, die mit den Werkzeugsteuerungen verbunden sind, das Verfahren umfassend:
Senden (201) einer Nachricht in Bezug auf die Steuerung eines oder mehrerer von Arbeitswerkzeugen (18a), die mit der ersten Werkzeugsteuerung (16a) verbunden sind, von dem Werkzeugserver (10) zu einer ersten (16a) von der Vielzahl von Werkzeugsteuerungen, wobei die Nachricht eine Zieladresse der ersten Werkzeugsteuerung und eine von der ersten Werkzeugsteuerung auszuführende angeforderte Aktion umfasst;
Empfangen (203) der von dem Werkzeugserver (10) gesendeten Nachricht basierend auf der Zieladresse durch die erste Werkzeugsteuerung (16a),
Analysieren (205) der Nachricht durch die erste Werkzeugsteuerung (16a) zum Erkennen der angeforderten Aktion,
Steuern (207) des einen oder der mehreren Arbeitswerkzeuge (18a), die mit der ersten Werkzeugsteuerung verbunden sind, gemäß der erkannten angeforderten Aktion, durch die erste Werkzeugsteuerung (16a),
wobei die Nachricht ferner einen Kopfteil und einen Nutzlastteil umfasst, wobei der Kopfteil die angeforderte Aktion umfasst und der Nutzlastteil Details der angeforderten Aktion umfasst, und wobei der Nutzlastteil in eine Vielzahl von Datenknoten unterteilt ist, wobei jeder Datenknoten einen Datenfeldtyp und ein Datenwertfeld umfasst.

2. Verfahren nach Anspruch 1, wobei, wenn sich die angeforderte Aktion auf Daten zum Steuern der Werkzeuge der ersten Werkzeugsteuerung bezieht, wie beispielsweise ein neuer Drehmomentwert, die Nachricht ferner einen Datentyp und einen Datenwert umfasst.

3. Verfahren nach Anspruch 1 oder 2, wobei die Nachricht ferner eine Quelladresse des Werkzeugservers (10) und eine Sitzungsidentität, und ggf. auch eine Sequenznummer umfasst.

4. Verfahren nach einem der Ansprüche 1-3, wobei die Nachricht ferner eine Quelladresse des Werkzeugservers (10) und ggf. auch Informationen umfasst, die definieren, ob die Nachricht eine Anforderung oder eine Antwort auf eine Anforderung ist.

5. Verfahren nach einem der vorangegangenen Ansprüche, wobei die Nachricht ferner Informationen darüber umfasst, welche Typen von Knoten der Werkzeugserver und die erste Werkzeugsteuerung sind.

6. Verfahren nach einem der vorangegangenen Ansprüche, ferner umfassend das Senden einer Antwort durch die erste Werkzeugsteuerung (16a) an den Werkzeugserver (10), wobei die Antwort bestätigt, ob die angeforderte Aktion ausgeführt wurde oder nicht.

7. Verfahren nach Anspruch 1, wobei jeder einzelne der Vielzahl von Datenknoten ferner ein Längenfeld umfasst, das die Länge des einzelnen Datenfeldtyps und des Datenwertfeldes definiert.

8. Verfahren nach einem der Ansprüche 1 oder 7, wobei jeder der Vielzahl von Datenknoten ferner untergeordnete Datenknotenfelder aufweist, wobei die untergeordneten Datenknotenfelder jeweils einen Datenfeldtyp und ein Datenwertfeld umfassen.

9. Verfahren, das von einem Werkzeugserver (10) eines Arbeitswerkzeug-Kommunikationssystems zum Erleichtern der Kommunikation zwischen dem Werkzeugserver (10) und einer Vielzahl von Werkzeugsteuerungen (16a, 16, 16) des Arbeitswerkzeug-Kommunikationssystems ausgeführt wird, wobei die Vielzahl von Werksteuerungen ferner zur Kommunikation mit Arbeitswerkzeugen (18) eingerichtet ist, die mit den Werkzeugsteuerungen verbunden sind, das Verfahren umfassend:
Senden einer Nachricht in Bezug auf die Steuerung eines oder mehrerer Arbeitswerkzeuge (18a), die mit der ersten Werkzeugsteuerung (16a) verbunden sind, an eine erste (16a) der Vielzahl von Werkzeugsteuerungen, wobei die Nachricht eine Zieladresse der ersten Werkzeugsteuerung und eine angeforderte Aktion umfasst, die von der ersten Werkzeugsteuerung auszuführen ist, wobei die Nachricht ferner einen Kopfteil und einen Nutzlastteil umfasst, wobei der Kopfteil die angeforderte Aktion umfasst und der Nutzlastteil Details der angeforderten Aktion umfasst, und wobei der Nutzlastteil in eine Vielzahl von Datenknoten unterteilt ist, wobei jeder Datenknoten einen Datenfeldtyp und ein Datenwertfeld umfasst.

10. Verfahren, das von einer Werkzeugsteuerung (16a) eines Arbeitswerkzeug-Kommunikationssystems zum Erleichtern der Kommunikation zwischen einem Werkzeugserver (10) des Arbeitswerkzeug-Kommunikationssystems ausgeführt wird, wobei die Werkzeugsteuerung zur Kommunikation mit Arbeitswerkzeugen (18) eingerichtet ist, die mit der Werkzeugsteuerung verbunden sind, das Verfahren umfassend:
Empfangen (303) einer Nachricht in Bezug auf die Steuerung eines oder mehrerer Arbeitswerkzeuge (18a) von dem Werkzeugserver (10), die mit der Werkzeugsteuerung (16a) verbunden sind, wobei die Nachricht eine Zieladresse der Werkzeugsteuerung und eine angeforderte Aktion umfasst, die von der Werkzeugsteuerung auszuführen ist, wobei die Nachricht basierend auf der Zieladresse empfangen wird, wobei die Nachricht ferner einen Kopfteil und einen Nutzlastteil umfasst, wobei der Kopfteil die angeforderte Aktion umfasst und der Nutzlastteil Details der angeforderten Aktion umfasst, und wobei der Nutzlastteil in eine Vielzahl von Datenknoten unterteilt ist, wobei jeder Datenknoten einen Datenfeldtyp und ein Datenwertfeld umfasst;
Analysieren (305) der empfangenen Nachricht, um die angeforderte Aktion zu erkennen,
Steuern (307) des einen oder der mehreren Arbeitswerkzeuge (18a) der Werkzeugsteuerung gemäß der erkannten angeforderten Aktion.

11. Werkzeugserver (10) eines Arbeitswerkzeug-Kommunikationssystems für die Kommunikation mit einer Vielzahl von Werkzeugsteuerungen (16a, 16, 16) des Arbeitswerkzeug-Kommunikationssystems, wobei die Vielzahl von Werkzeugsteuerungen weiter für die Kommunikation mit Arbeitswerkzeugen (18) eingerichtet ist, die mit der Vielzahl von Werkzeugsteuerungen verbunden sind, wobei der Werkzeugserver (10) einen Prozessor (403) und einen Speicher (404) umfasst, wobei der Speicher durch den Prozessor ausführbare Anweisungen enthält, wodurch der Werkzeugserver funktionsfähig ist zum:
Senden einer Nachricht in Bezug auf die Steuerung eines oder mehrerer Arbeitswerkzeuge (18a), die mit der ersten Werkzeugsteuerung (16a) verbunden sind, an eine erste (16a) von der Vielzahl von Werkzeugsteuerungen, wobei die Nachricht eine Zieladresse der ersten Werkzeugsteuerung und eine angeforderte Aktion umfasst, die von der ersten Werkzeugsteuerung auszuführen ist, wobei die Nachricht einen Kopfteil und einen Nutzlastteil umfasst, wobei der Kopfteil die angeforderte Aktion umfasst und der Nutzlastteil Details der angeforderten Aktion umfasst, und wobei der Nutzlastteil in eine Vielzahl von Datenknoten unterteilt ist, wobei jeder Datenknoten einen Datenfeldtyp und ein Datenwertfeld umfasst.

12. Werkzeugserver nach Anspruch 11, wobei, wenn sich die angeforderte Aktion auf Daten zum Steuern der Werkzeuge der ersten Werkzeugsteuerung bezieht, wie beispielsweise ein neuer Drehmomentwert, die Nachricht ferner einen Datentyp und ggf. auch einen Datenwert umfasst.

13. Werkzeugserver nach Anspruch 11 oder 12, wobei die Nachricht ferner eine Quelladresse des Werkzeugservers (10) und eine Sitzungsidentität und ggf. auch eine Sequenznummer umfasst.

14. Werkzeugserver nach einem der Ansprüche 11-13, wobei die Nachricht ferner eine Quelladresse des Werkzeugservers (10) und ggf. auch Informationen umfasst, die definieren, ob die Nachricht eine Anforderung oder eine Antwort auf eine Anforderung ist.

15. Werkzeugserver nach einem der Ansprüche 11-14, wobei die Nachricht ferner Informationen darüber umfasst, welche Typen von Knoten der Werkzeugserver und die erste Werkzeugsteuerung sind.

16. Werkzeugserver nach einem der Ansprüche 11-15, wobei der Speicher (404) ferner Anweisungen enthält, die von dem Prozessor (403) ausführbar sind, wobei der Werkzeugserver zum Empfangen einer Antwort von der ersten Werkzeugsteuerung (16a) funktionsfähig ist, wobei die Antwort bestätigt, ob die angeforderte Aktion ausgeführt wurde oder nicht.

17. Werkzeugserver nach Anspruch 11, wobei jeder einzelne der Vielzahl von Datenknoten ferner ein Längenfeld umfasst, das die Länge des einzelnen des Datenfeldtyps und des Datenwertfeldes definiert.

18. Werkzeugserver nach einem der Ansprüche 11 oder 17, wobei jeder der Vielzahl von Datenknoten ferner untergeordnete Datenknotenfelder aufweist, wobei die untergeordneten Datenknotenfelder jeweils einen Datenfeldtyp und ein Datenwertfeld umfassen.

19. Werkzeugsteuerung (16a) eines Arbeitswerkzeug-Kommunikationssystems für die Kommunikation mit einem Werkzeugserver (10) des Arbeitswerkzeug-Kommunikationssystems, wobei die Werkzeugsteuerung für die Kommunikation mit Arbeitswerkzeugen (18) eingerichtet ist, die mit der Werkzeugsteuerung verbunden sind, wobei die Werkzeugsteuerung (16a) einen Prozessor (503) und einen Speicher (504) umfasst, wobei der Speicher durch den Prozessor ausführbare Anweisungen enthält, wodurch die Werkzeugsteuerung funktionsfähig ist zum:
Empfangen einer Nachricht von dem Werkzeugserver (10) in Bezug auf die Steuerung eines oder mehrerer der Arbeitswerkzeuge (18a), die mit der Werkzeugsteuerung (16a) verbunden sind, wobei die Nachricht eine Zieladresse der Werkzeugsteuerung und eine angeforderte Aktion umfasst, die von der Werkzeugsteuerung auszuführen ist, wobei die Nachricht basierend auf der Zieladresse empfangen wird;
Analysieren der empfangenen Nachricht, um die angeforderte Aktion zu erkennen, und
Steuern des einen oder der mehreren Arbeitswerkzeuge (18a) der Werkzeugsteuerung gemäß der erkannten angeforderten Aktion,
wobei die Nachricht ferner einen Kopfteil und einen Nutzlastteil umfasst, wobei der Kopfteil die angeforderte Aktion umfasst und der Nutzlastteil Details der angeforderten Aktion umfasst, und wobei der Nutzlastteil in eine Vielzahl von Datenknoten unterteilt ist, wobei jeder Datenknoten einen Datenfeldtyp und ein Datenwertfeld umfasst.

20. Werkzeugsteuerung nach Anspruch 19, wobei, wenn sich die angeforderte Aktion auf Daten zum Steuern der Werkzeuge der Werkzeugsteuerung bezieht, wie beispielsweise ein neuer Drehmomentwert, die Nachricht ferner einen Datentyp und ggf. auch einen Datenwert umfasst.

21. Werkzeugsteuerung nach Anspruch 19 oder 20, wobei die Nachricht ferner eine Quelladresse des Werkzeugservers (10) und eine Sitzungsidentität, und ggf. auch eine Sequenznummer umfasst.

22. Werkzeugsteuerung nach einem der Ansprüche 19-21, wobei die Nachricht ferner eine Quelladresse des Werkzeugservers (10) und ggf. auch Informationen umfasst, die definieren, ob die Nachricht eine Anforderung oder eine Antwort auf eine Anforderung ist.

23. Werkzeugsteuerung nach einem der Ansprüche 19-22, wobei die Nachricht ferner Informationen darüber umfasst, welche Arten von Knoten der Werkzeugserver und die Werkzeugsteuerung sind.

24. Werkzeugsteuerung nach einem der Ansprüche 19-23, wobei der Speicher (504) ferner Anweisungen enthält, die von dem Prozessor (503) ausführbar sind, wobei die Werkzeugsteuerung zum Senden einer Antwort an den Werkzeugserver (10) funktionsfähig ist, wobei die Antwort bestätigt, ob die angeforderte Aktion ausgeführt wurde oder nicht.

25. Werkzeugsteuerung nach Anspruch 19, wobei jeder einzelne der Vielzahl von Datenknoten ferner ein Längenfeld umfasst, das die Länge des einzelnen des Datenfeldtyps und des Datenwertfeldes definiert.

26. Werkzeugsteuerung nach einem der Ansprüche 19 oder 25, wobei jeder der Vielzahl von Datenknoten ferner untergeordnete Datenknotenfelder aufweist, wobei die untergeordneten Datenknotenfelder jeweils einen Datenfeldtyp und ein Datenwertfeld umfassen.

27. Computerprogramm (405), das computerlesbare Codemittel umfasst, die, wenn sie in einem Werkzeugserver (10) eines Arbeitswerkzeug-Kommunikationssystems für die Kommunikation mit einer Vielzahl von Werkzeugsteuerungen (16a, 16, 16) des Arbeitswerkzeug-Kommunikationssystems laufen, den Werkzeugserver zum Ausführen der folgenden Schritte veranlassen:
Senden einer Nachricht in Bezug auf die Steuerung eines oder mehrerer Arbeitswerkzeuge (18a), die mit der ersten Werkzeugsteuerung (16a) verbunden sind, an eine erste (16a) der Vielzahl von Werkzeugsteuerungen, wobei die Nachricht eine Zieladresse der ersten Werkzeugsteuerung und eine angeforderte Aktion umfasst, die von der ersten Werkzeugsteuerung auszuführen ist, wobei die Nachricht ferner einen Kopfteil und einen Nutzlastteil umfasst, wobei der Kopfteil die angeforderte Aktion umfasst und der Nutzlastteil Details der angeforderten Aktion umfasst, und wobei der Nutzlastteil in eine Vielzahl von Datenknoten unterteilt ist, wobei jeder Datenknoten einen Datenfeldtyp und ein Datenwertfeld umfasst.

28. Computerprogramm (505), das computerlesbare Codemittel umfasst, die, wenn sie in einer Werkzeugsteuerung (16a, 16, 16) eines Arbeitswerkzeug-Kommunikationssystems für die Kommunikation mit einem Werkzeugserver (10) des Arbeitswerkzeug-Kommunikationssystems laufen, die Werkzeugsteuerung zum Ausführen der folgenden Schritte veranlassen:
Empfangen einer Nachricht von dem Werkzeugserver (10) in Bezug auf die Steuerung eines oder mehrerer Arbeitswerkzeuge (18a), die mit der Werkzeugsteuerung verbunden sind, wobei die Nachricht eine Zieladresse der ersten Werkzeugsteuerung und eine angeforderte Aktion umfasst, die von der ersten Werkzeugsteuerung auszuführen ist, wobei die Nachricht basierend auf der Zieladresse empfangen wird;
Analysieren der empfangenen Nachricht, um die angeforderte Aktion zu erkennen,
Steuern des einen oder der mehreren Arbeitswerkzeuge (18a) der Werkzeugsteuerung gemäß der erkannten angeforderten Aktion,
wobei die Nachricht ferner einen Kopfteil und einen Nutzlastteil umfasst, wobei der Kopfteil die angeforderte Aktion umfasst und der Nutzlastteil Details der angeforderten Aktion umfasst, und wobei der Nutzlastteil in eine Vielzahl von Datenknoten unterteilt ist, wobei jeder Datenknoten einen Datenfeldtyp und ein Datenwertfeld umfasst.

## Revendications

1. Procédé exécuté par un système de communication d'outils de travail pour la facilitation de la communication entre un serveur d'outils (10) et une pluralité de contrôleurs d'outils (16a, 16, 16) du système de communication d'outils de travail, le serveur d'outils (10) étant connecté à la pluralité de contrôleurs d'outils (16a, 16, 16), les contrôleurs d'outils étant en outre adaptés pour une communication avec des outils de travail (18) connectés aux contrôleurs d'outils, le procédé comprenant :
l'envoi (201), à partir du serveur d'outils (10) à un premier (16a) de la pluralité de contrôleurs d'outils, un message lié au contrôle d'un ou plusieurs outils de travail (18a) connectés au premier contrôleur d'outils (16a), le message comprenant une adresse de destination du premier contrôleur d'outils et une action demandée devant être exécutée par le premier contrôleur d'outils ;
la réception (203), par le premier contrôleur d'outils (16a), du message envoyé par le serveur d'outils (10), sur la base de l'adresse de destination,
l'analyse (205), par le premier contrôleur d'outils (16a), du message pour détecter l'action demandée,
le contrôle (207), par le premier contrôleur d'outils (16a), de l'un ou plusieurs outils de travail (18a) connectés au premier contrôleur d'outils selon l'action demandée détectée,
où le message comprend en outre une partie d'en-tête et une partie de charge utile, la partie d'en-tête comprenant l'action demandée et la partie de charge utile comprenant des détails de l'action demandée, et où la partie de charge utile est divisée en une pluralité de noeuds de données, chaque noeud de données comprenant un champ de type de données et un champ de valeur de données.

2. Procédé selon la revendication 1, dans lequel lorsque l'action demandée est liée aux données pour le contrôle des outils du premier contrôleur d'outils, telles qu'une nouvelle valeur de couple, le message comprend en outre un type des données et une valeur de donnée.

3. Procédé selon la revendication 1 ou 2, dans lequel le message comprend en outre une adresse source du serveur d'outils (10) et une identité de session, et éventuellement aussi un numéro de séquence.

4. Procédé selon l'une quelconque des revendications 1 à 3, dans lequel le message comprend en outre une adresse source du serveur d'outils (10) et éventuellement aussi des informations définissant si le message est une demande ou une réponse à une demande.

5. Procédé selon l'une quelconque des revendications précédentes, dans lequel le message comprend en outre des informations sur les types de noeuds que sont le serveur d'outils et le premier contrôleur d'outils.

6. Procédé selon l'une quelconque des revendications précédentes, comprenant, en outre, l'envoi d'une réponse, par le premier contrôleur d'outils (16a) au serveur d'outils (10), la réponse confirmant si l'action demandée a été exécutée ou non.

7. Procédé selon la revendication 1, dans lequel un élément individuel de la pluralité de noeuds de données comprend en outre un champ de longueur définissant la longueur d'un élément individuel du champ de type de données et du champ de valeur de données.

8. Procédé selon l'une quelconque des revendications 1 à 7, dans lequel l'élément individuel de la pluralité de noeuds de données comprend en outre des champs de noeuds de données enfants, lesquels champs de noeuds de données enfants comprennent chacun un champ de type de données et un champ de valeur de données.

9. Procédé exécuté par un serveur d'outils (10) d'un système de communication d'outils de travail pour la facilitation d'une communication entre le serveur d'outils (10) et une pluralité de contrôleurs d'outils (16a, 16, 16) du système de communication d'outils de travail, la pluralité de contrôleurs d'outils étant en outre adaptés pour la communication avec des outils de travail (18) connectés aux contrôleurs d'outils, le procédé comprenant :
l'envoi à un premier (16a) de la pluralité de contrôleurs d'outils un message lié au contrôle d'un ou plusieurs outils de travail (18a) connectés au premier contrôleur d'outils (16a), le message comprenant une adresse de destination du premier contrôleur d'outils et une action demandée pour être exécutée par le premier contrôleur d'outils, où le message comprend en outre une partie d'en-tête et une partie de charge utile, la partie d'en-tête comprenant l'action demandée et la partie de charge utile comprenant des détails de l'action demandée, et où la partie de charge utile est divisée en une pluralité de noeuds de données, chaque noeud de données comprenant un champ de type de données et un champ de valeur de données.

10. Procédé exécuté par un contrôleur d'outils (16a) d'un système de communication d'outils de travail pour la facilitation d'une communication avec un serveur d'outils (10) du système de communication d'outils de travail, le contrôleur d'outils étant adapté pour la communication avec des outils de travail (18) connectés au contrôleur d'outils, le procédé comprenant :
la réception (303), à partir du serveur d'outils (10), d'un message lié au contrôle d'un ou plusieurs outils de travail (18a) connectés au contrôleur d'outils (16a), le message comprenant une adresse de destination du contrôleur d'outils et une action demandée pour être exécutée par le contrôleur d'outils, le message étant reçu sur la base de l'adresse de destination, où le message comprend en outre une partie d'en-tête et une partie de charge utile, la partie d'entête comprenant l'action demandée et la partie de charge utile comprenant des détails de l'action demandée, et où la partie de charge utile est divisée en une pluralité de noeuds de données, chaque noeud de données comprenant un champ de type de données et un champ de valeur de données ;
l'analyse (305) du message reçu pour détecter l'action demandée,
le contrôle (307) de l'un ou plusieurs outils de travail (18a) du contrôleur d'outils selon l'action demandée détectée.

11. Serveur d'outils (10) d'un système de communication d'outils de travail pour la communication avec une pluralité de contrôleurs d'outils (16a, 16, 16) du système de communication d'outils de travail, la pluralité de contrôleurs d'outils étant en outre adaptés pour la communication avec des outils de travail (18) connectés à la pluralité de contrôleurs d'outils, le serveur d'outils (10) comprenant un processeur (403) et une mémoire (404), ladite mémoire contenant des instructions exécutables par ledit processeur, ledit serveur d'outil étant utilisé pour :
l'envoi à un premier (16a) de la pluralité de contrôleurs d'outils un message lié au contrôle d'un ou plusieurs outils de travail (18a) connectés au premier contrôleur d'outils (16a), le message comprenant une adresse de destination du premier contrôleur d'outils et une action demandée pour être exécutée par le premier contrôleur d'outils, où le message comprend une partie d'en-tête et une partie de charge utile, la partie d'en-tête comprenant l'action demandée et la partie de charge utile comprenant des détails de l'action demandée, et où la partie de charge utile est divisée en une pluralité de noeuds de données, chaque noeud de données comprenant un champ de type de données et un champ de valeur de données.

12. Serveur d'outils selon la revendication 11, dans lequel lorsque l'action demandée est liée aux données pour le contrôle des outils du premier contrôleur d'outils, telles qu'une nouvelle valeur de couple, le message comprend en outre un type des données et éventuellement aussi une valeur de donnée.

13. Serveur d'outils selon la revendication 11 ou 12, dans lequel le message comprend en outre une adresse source du serveur d'outils (10) et une identité de session, et éventuellement aussi un numéro de séquence.

14. Serveur d'outils selon l'une quelconque des revendications 11 à 13, dans lequel le message comprend en outre une adresse source du serveur d'outils (10) et éventuellement aussi des informations définissant si le message est une demande ou une réponse à une demande.

15. Serveur d'outils selon l'une quelconque des revendications 11 à 14, dans lequel le message comprend en outre des informations sur les types de noeuds que sont le serveur d'outils et le premier contrôleur d'outils.

16. Serveur d'outils selon l'une quelconque des revendications 11 à 15, dans lequel ladite mémoire (404) contient en outre des instructions exécutable par ledit processeur (403), ledit serveur d'outils étant utilisé pour la réception d'une réponse à partir du premier contrôleur d'outils (16a), la réponse confirmant si l'action demandée a été exécutée ou non.

17. Serveur d'outils selon la revendication 11, dans lequel un élément individuel de la pluralité de noeuds de données comprend en outre un champ de longueur définissant la longueur d'un élément individuel du champ de type de données et du champ de valeur de données.

18. Serveur d'outils selon l'une quelconque des revendications 11 ou 17, dans lequel l'élément individuel de la pluralité de noeuds de données comprend en outre des champs de noeuds de données enfants, lesquels champs de noeuds de données enfants comprennent chacun un champ de type de données et un champ de valeur de données.

19. Contrôleur d'outils (16a) d'un système de communication d'outils de travail pour la communication avec un serveur d'outils (10) du système de communication d'outils de travail, le contrôleur d'outils étant adapté pour la communication avec les outils de travail (18) connectés au contrôleur d'outils, le contrôleur d'outils (16a) comprenant un processeur (503) et une mémoire (504), ladite mémoire contenant des instructions exécutables par ledit processeur, ledit contrôleur étant utilisé pour :
la réception, à partir du serveur d'outils (10), d'un message lié au contrôle d'un ou plusieurs des outils de travail (18a) connectés au contrôleur d'outils (16a), le message comprenant une adresse de destination du contrôleur d'outils et une action demandée devant être exécutée par le contrôleur d'outils, le message étant reçu sur la base de l'adresse de destination ;
l'analyse du message reçu pour détecter l'action demandée, et
le contrôle de l'un ou plusieurs outils de travail (18a) du contrôleur d'outils selon l'action demandée détectée,
où le message comprend en outre une partie d'en-tête et une partie de charge utile, la partie d'en-tête comprenant l'action demandée et la partie de charge utile comprenant des détails de l'action demandée, et où la partie de charge utile est divisée en une pluralité de noeuds de données, chaque noeud de données comprenant un champ de type de données et un champ de valeur de données.

20. Contrôleur d'outils selon la revendication 19, dans lequel lorsque l'action demandée est liée aux données pour le contrôle des outils du contrôleur d'outils, telles qu'une nouvelle valeur de couple, le message comprend en outre un type des données et éventuellement aussi une valeur de donnée.

21. Contrôleur d'outils selon la revendication 19 ou 20, dans lequel le message comprend en outre une adresse source du serveur d'outils (10) et une identité de session, et éventuellement aussi un numéro de séquence.

22. Contrôleur d'outils selon l'une quelconque des revendications 19 à 21, dans lequel le message comprend en outre une adresse source du serveur d'outils (10) et éventuellement aussi des informations définissant si le message est une demande ou une réponse à une demande.

23. Contrôleur d'outils selon l'une quelconque des revendications 19 à 22, dans lequel le message comprend en outre des informations sur les types de noeuds que sont le serveur d'outils et le contrôleur d'outils.

24. Contrôleur d'outils selon l'une quelconque des revendications 19 à 23, dans lequel ladite mémoire (504) contient en outre des instructions exécutable par ledit processeur (503), ledit contrôleur d'outils étant utilisé pour l'envoi d'une réponse au serveur d'outils (10), la réponse confirmant si l'action demandée a été exécutée ou non.

25. Contrôleur d'outils selon la revendication 19, dans lequel un élément individuel de la pluralité de noeuds de données comprend en outre un champ de longueur définissant la longueur d'un élément individuel du champ de type de données et du champ de valeur de données.

26. Contrôleur d'outils selon l'une quelconque des revendications 19 ou 25, dans lequel l'élément individuel de la pluralité de noeuds de données comprend en outre des champs de noeuds de données enfants, lesquels champs de noeuds de données enfants comprennent chacun un champ de type de données et un champ de valeur de données.

27. Logiciel (405) comprenant des moyens de code lisibles par ordinateur qui, lorsqu'ils sont exécutés sur un serveur d'outils (10) d'un système de communication d'outils de travail pour la communication avec une pluralité de contrôleurs d'outils (16a, 16, 16) du système de communication d'outils de travail, amènent le serveur d'outils à exécuter les étapes suivantes :
l'envoi à un premier (16a) de la pluralité de contrôleurs d'outils un message lié au contrôle d'un ou plusieurs outils de travail (18a) connectés au premier contrôleur d'outils (16a), le message comprenant une adresse de destination du premier contrôleur d'outils et une action demandée pour être exécutée par le premier contrôleur d'outils, où le message comprend en outre une partie d'en-tête et une partie de charge utile, la partie d'en-tête comprenant l'action demandée et la partie de charge utile comprenant des détails de l'action demandée, et où la partie de charge utile est divisée en une pluralité de noeuds de données, chaque noeud de données comprenant un champ de type de données et un champ de valeur de données.

28. Logiciel (505) comprenant des moyens de code lisibles par ordinateur qui, lorsqu'ils sont exécutés sur un contrôleur d'outils (16a, 16, 16) d'un système de communication d'outils de travail pour la communication avec un serveur d'outils (10) du système de communication d'outils de travail, amènent le contrôleur d'outils à exécuter les étapes suivantes :
la réception, à partir du serveur d'outils (10), d'un message lié au contrôle d'un ou plusieurs outils de travail (18a) connectés au contrôleur d'outils, le message comprenant une adresse de destination du premier contrôleur d'outils et une action demandée devant être exécutée par le premier contrôleur d'outils, le message étant reçu sur la base de l'adresse de destination ;
l'analyse du message reçu pour détecter l'action demandée,
le contrôle de l'un ou plusieurs outils de travail (18a) du contrôleur d'outils selon l'action demandée détectée,
où le message comprend en outre une partie d'en-tête et une partie de charge utile, la partie d'en-tête comprenant l'action demandée et la partie de charge utile comprenant des détails de l'action demandée, et où la partie de charge utile est divisée en une pluralité de noeuds de données, chaque noeud de données comprenant un champ de type de données et un champ de valeur de données.
